# EUROPÄISCHE PATENTSCHRIFT

(11) **EP 3 910 233 B1**
(45) Veröffentlichungstag und Bekanntmachung des Hinweises auf die Patenterteilung: **27.12.2023**
(21) Anmeldenummer: 21173474.4
(22) Anmeldetag: 12.05.2021
(51) Int. Cl.: F21S 6/00, F21V 7/00, F21V 8/00, F21S 10/00

(54) **LEUCHTE**
LAMP
LUMINAIRE

(30) Priorität: 13.05.2020 CH 5762020
(43) Veröffentlichungstag der Anmeldung: 17.11.2021
(73) Patentinhaber: Regent Beleuchtungskörper AG, 4018 Basel (CH)
(72) Erfinder: Reutter, Kornelius, 4056 Basel (CH); Golsouzidou, Mario, 4052 Basel (CH)
(74) Vertreter: Latscha Schöllhorn Partner AG

(56) Entgegenhaltungen:
- EP-A1- 2 428 826
- EP-A1- 3 096 071
- EP-A1- 3 165 948
- EP-A1- 3 187 773
- DE-A1-102005 016 681
- DE-U1- 29 919 055

## Beschreibung

### Technisches Gebiet

Die Erfindung betrifft eine Leuchte und insbesondere eine Tischleuchte gemäss dem Oberbegriff des unabhängigen Anspruchs 1.

Solche Leuchten, die typischerweise insbesondere zum Aufstellen auf eine im wesentlichen ebene Oberfläche wie beispielsweise eine Schreibtischplatte vorgesehen sind und die einen Fussteil zum Aufstellen der Leuchte auf der Oberfläche und einen Leuchtteil, der sich vom Fussteil nach oben erstreckt, wenn der Fussteil auf der Oberfläche aufgestellt ist, umfassen, können zum Beleuchten beziehungsweise Ausleuchten eines Arbeitsplatzes eingesetzt werden.

### Stand der Technik

Zur Beleuchtung von Räumen und/oder Arbeitsplätzen werden heutzutage Leuchten in unterschiedlichen auf den jeweiligen Anwendungszweck angepassten Ausführungsformen eingesetzt. Dabei wird zumeist angestrebt, mit den Leuchten Lichtverteilungskurven erzeugen zu können, die einer Ausleuchtung bei einer bestimmungsgemässen Verwendung der Leuchten möglichst gut entsprechen.

Unter anderem werden in Büros zur Ausleuchtung von Arbeitsplätzen beispielsweise auf Schreibtischen Tischleuchten eingesetzt, die zusätzliches Licht zu einer Grundbeleuchtung erzeugen. Insbesondere bei älteren Personen ist eine solche Zusatzbeleuchtung häufig erwünscht beziehungsweise angebracht. Beispielsweise kann die für Arbeitsumgebungen typischerweise vorhandene Grundbeleuchtung von mindesten 300 Lux für Arbeitsplätze häufig nicht ausreichen. So wird der Arbeitsplatz selbst zusätzlich beleuchtet, um eine Beleuchtung von mehr als 500 Lux oder 750 Lux zu erreichen.

Tischleuchten werden typischerweise auf dem auszuleuchtenden Tisch selbst oder angrenzend daran auf dem Fussboden aufgestellt. Häufig umfassen sie einen vertikal Licht abstrahlenden Leuchtkörper, der über ein Gestänge mit einem Fussteil verbunden ist. Das Gestänge kann flexibel einstellbar sein, sodass sich der Leuchtkörper idealerweise möglichst über dem Arbeitsplatz befindet und diesen bevorzugt ausleuchten kann. Solche Tischleuchten sind typischerweise vergleichsweise unhandlich. Die Gestänge können sperrig und insbesondere bei einer idealen Ausleuchtung des Arbeitsplatzes störend sein. Zudem sind flexibel einstellbare Gestänge vergleichsweise anfällig auf Verschleiss, da sie typischerweise mit beweglichen Teilen wie Gelenken oder Drehlagern ausgestattet sind. Zudem können solche Tischleuchten blenden, insbesondere wenn die Leuchtkörper für eine bevorzugte Ausleuchtung des Arbeitsplatzes ideal positioniert sind. Schliesslich können solche Tischleuchten mit Gestänge ein unruhiges Erscheinungsbild generieren, was insbesondere bei einer Ansammlung von Arbeitsplätzen wie beispielsweise in Grossraumbüros unerwünscht sein kann.

Ein Ansatz zur Verbesserung der vorstehenden Situation ist in der EP 3 187 773 A1 beschrieben. Darin wird eine Leuchte vorgeschlagen, die einen Leuchtenkopf mit einer vertikal ausgerichteten Lichtverteilungsplatte umfasst, die mit einer Auslenkstruktur ausgestattet ist. Die Lichtverteilungsplatte wird von einem Leuchtmittel horizontal mit Licht beaufschlagt und lenkt das Licht in Richtung des Arbeitsplatzes um. Insbesondere ist die Auslenkstruktur so beschaffen, dass das Licht asymmetrisch schräg nach unten geleitet wird. Der Leuchtenkopf muss sich also für eine ideale Ausleuchtung des Arbeitsplatzes nicht genau über dem Arbeitsplatz befinden, sondern kann seitlich davon angeordnet werden. So kann verhindert werden, dass der Leuchtenkopf beispielsweise über ein Gestänge flexibel positionierbar sein muss.

Eine alternative Lösung zur Reduktion der vorstehend erwähnten Schwierigkeiten ist in der EP 3 396 242 A1 beschrieben. Darin wird ein Lichtstrahler vorgeschlagen, der zur Ausleuchtung eines Arbeitsplatzes wie beispielsweise einer Oberfläche eines Schreibtischs diesen indirekt über die Decke beleuchtet. Insbesondere ist der Lichtstrahler so ausgebildet, dass an der Decke eine virtuelle Deckenleuchte erzeugt wird, die den Arbeitsplatz gezielt beleuchtet. Durch die indirekte Ausleuchtung kann erreicht werden, dass der Lichtstrahler effizient an einem Ort platziert wird, wo er vergleichsweise wenig stört. DE 299 19 055 U1 offenbart eine weitere Lösung.

Obwohl diese Art von bekannten Leuchten einige der vorstehend aufgeführten Nachteile zu beheben vermag, kann es dennoch ein Bedürfnis sein, den Arbeitsplatz gezielter auszuleuchten und die zugehörige Leuchte kompakt beziehungsweise platzsparend auszugestalten.

Der vorliegenden Erfindung liegt daher die Aufgabe zugrunde, eine Leuchte vorzuschlagen, die beispielsweise als eine Tischleuchte eine effiziente, gleichmässige und möglichst vollständige Ausleuchtung eines Arbeitsplatzes wie insbesondere eines Schreib- oder Arbeitstischs ermöglicht.

### Darstellung der Erfindung

Die Aufgabe wird erfindungsgemäss durch eine Leuchte gelöst, wie sie im unabhängigen Anspruch 1 definiert ist. Vorteilhafte Ausführungsvarianten der Erfindung ergeben sich aus den abhängigen Ansprüchen.

Das Wesen der Erfindung besteht im Folgenden: Eine Leuchte zum Aufstellen auf eine im wesentlichen ebene Oberfläche wie beispielsweise eine Schreibtischplatte umfasst einen Fussteil zum Aufstellen der Leuchte auf der Oberfläche und einen Leuchtteil, der sich vom Fussteil nach oben erstreckt, wenn der Fussteil auf der Oberfläche aufgestellt ist. Der Leuchtteil weist ein Strahlerleuchtmittel und eine Strahleroptik auf. Die Strahleroptik des Leuchtteils ist dazu ausgebildet, aus vom Strahlerleuchtmittel erzeugten Licht einen Strom von sichtbarem Licht nach oben beispielsweise an eine Raumdecke zu formen, wenn der Fussteil auf der Oberfläche aufgestellt ist.

Der Begriff "Raumdecke" kann sich hier auf eine obere Begrenzung eines Raumes beziehen. Nicht zwingend aber typischerweise sind Raumdecken horizontal ausgerichtet. Sie können durch verputztes Mauerwerk, Paneele, gespannte textile Materialien, Metalle oder dergleichen gebildet sein. Die Raumdecke kann die Decke eines geschlossenen oder offenen Raums sein.

Der Leuchtteil umfasst weiter ein Auslenkleuchtmittel und eine Auslenkoptik. Die Auslenkoptik des Leuchtteils ist im Wesentlichen plattenförmig mit einer Vorderseite, einer Rückseite, die Vorderseite und die Rückseite miteinander verbindenden Seitenkanten und einer Auslenkstruktur ausgebildet. Die Vorderseite der Auslenkoptik des Leuchtteils ist quasi aufrecht ausgerichtet, wenn der Fussteil auf der Oberfläche aufgestellt ist. Das Auslenkleuchtmittel des Leuchtteils ist dazu angeordnet, Licht durch eine der Seitenkanten der Auslenkoptik in die Auslenkoptik einzustrahlen. Die Auslenkstruktur der Auslenkoptik des Leuchtteils ist dazu ausgestaltet, das durch die eine der Seitenkanten eingestrahlte Licht so umzuleiten, dass es durch die Vorderseite der Auslenkoptik abgestrahlt wird und eine Hauptabstrahlrichtung aufweist. Die Hauptabstrahlrichtung beschreibt einen Abstrahlwinkel zur Vorderseite, der in einem Bereich von etwa 10° bis etwa 70°, vorzugsweise in einem Bereich von etwa 20° bis etwa 60° und insbesondere in einem Bereich von etwa 30° bis etwa 50° liegt oder der etwa 45° beträgt.

Unter dem Begriff "Tischleuchte" wird hier eine Leuchte verstanden, die spezifisch zur Ausleuchtung eines Tischs beziehungsweise eines Teiles davon wie beispielsweise eines Arbeitsplatzes vorgesehen ist. Typischerweise werden Tischleuchten auf den Tisch selbst oder auch unmittelbar daneben aufgestellt, damit die Tischplatte gut ausgeleuchtet werden kann. Insbesondere werden Tischleuchten bevorzugt in einer Ecke der Tischplatte oder neben einer Ecke der Tischplatte aufgestellt. Je nach Art der Tischleuchte kann der Fussteil zum Aufstellen auf eine Tischplatte oder zum Aufstellen auf einem Fussboden ausgebildet sein. Alternativ oder ergänzend dazu kann die Tischleuchte auch zur Montage an oder Integration in einen Bildschirm beziehungsweise Monitor ausgebildet sein.

Unter dem Begriff "nach oben erstrecken" wird im Zusammenhang mit dem Leuchtteil eine Anordnung verstanden, bei welcher der Leuchtteil zumindest zu einem überwiegenden Teil oberhalb des Fussteils beziehungsweise höher als das Fussteil liegt, wenn der Fussteil bestimmungsgemäss abgestellt ist. Dabei kann das Leuchtteil mehr oder weniger vertikal ausgerichtet oder quasi aufrecht angeordnet sein. Der Leuchtteil kann direkt oder indirekt mit dem Fussteil verbunden sein.

Das Auslenkleuchtmittel kann der einen der Seitenkanten zugeordnet sein, indem es benachbart zur oder anliegend an die zugehörige Seitenkante angeordnet ist. Dabei kann es vor allem von Bedeutung sein, dass das Auslenkleuchtmittel Licht auf die zugehörige Seitenkante strahlt, sodass es durch diese hindurch in die Auslenkoptik eindringt.

Der Begriff "Strom von sichtbarem Licht", der hier vereinfacht auch als "Lichtstrom" oder "Beam" bezeichnet wird, bezieht sich auf sichtbares Licht, das von der Leuchte nach oben hin abgegeben wird. Der Lichtstrom beziehungsweise Beam kann ein Strahlenbündel sein, wobei unter Strahlenbündel eine Anzahl von Lichtstrahlen verstanden wird, die genau oder annähernd parallel zueinander oder auch überwiegend in eine ähnliche Richtung verlaufen. Insbesondere kann der Lichtstrom auch einen Ausbreitungswinkel aufweisen, wie er typischerweise bei Punktlichtquellen auftritt

Der Begriff "plattenförmig" kann sich im Zusammenhang mit der Auslenkoptik auf einen im Wesentlichen quader- oder würfelförmigen Körper beziehen. Insbesondere kann die Auslenkoptik quasi ein Quader sein, der quasi Rechtecke als Seitenkanten umfasst, die wesentlich länger als breit sind. Dadurch kann der Quader beziehungsweise die Auslenkoptik verhältnismässig flach sein beziehungsweise seine Tiefe oder Dicke kann im Vergleich zu seiner Breite und Länge verhältnismässig klein sein. So können die Seitenkanten im Vergleich zur Vorderseite beziehungsweise Rückseite relativ schmal beziehungsweise quasi linienförmig ausgeformt sein und die Vorderseite beziehungsweise Rückseite im Vergleich zu den Seitenkanten relativ breit beziehungsweise flächig.

Die Begriffe "Vorderseite" und Rückseite" im Zusammenhang mit der Auslenkoptik können sich auf eine in bestimmungsgemässer Aufstellung vordere beziehungsweise hintere Fläche der Auslenkoptik beziehen. Die Vorderseite und die Rückseite können eine gleiche oder auch eine unterschiedliche Grundform aufweisen. Sie können quasi eben sein. Der Begriff "eben" im Zusammenhang mit der Vorderseite und Rückseite kann sich auf eine quasi flache Form im Wesentlichen ohne Wölbungen oder Krümmungen beziehen. Dabei kann die Vorder- beziehungsweise Rückseite auch eine gewisse Rauheit beziehungsweise Strukturierung oder bei näherer beziehungsweise sequenziellen Betrachtung Unebenheit aufweisen, die jedoch bei einer Gesamtbetrachtung nicht wesentlich ins Gewicht fällt.

Die Vorderseite, die Rückseite und die Seitenkanten können jeweils Flächen und insbesondere Rechtecke sein oder umfassen. Dabei können die Seitenkanten rechtwinklig zu den Vorder- und Rückseiten angeordnet sein. Insbesondere bei einer vorteilhaften keilförmigen Ausführung der Auslenkoptik können die beiden langen Seitenkanten leicht von einer geometrischen Rechteckform abweichen. Dabei können sie sich entlang der Auslenkoptik leicht verjüngen beziehungsweise die Dicke der Seitenkante kann entlang der Auslenkoptik abnehmen.

Der Begriff "Hauptabstrahlrichtung" wird vorliegend generell als die Richtung verstanden, in die ein Leuchtmittel oder eine Leuchte beziehungsweise eine in einer Leuchte eingesetzte Optik wie die Auslenkoptik hauptsächlich, mehrheitlich oder bestimmungsgemäss abstrahlt. Typischerweise strahlen Leuchtmittel beziehungsweise Leuchten beziehungsweise Optiken Licht zumindest in einem gewissen Ausmass auch in andere Richtungen als der Hauptabstrahlrichtung ab (Streuung). Als Hauptabstrahlrichtung kann die Richtung verstanden werden, in die das Leuchtmittel beziehungsweise die Leuchte beziehungsweise die Optik zu einem bestimmten Zweck leuchten soll und dazu ausgebildet ist. In einer Lichtverteilungskurve (LVK) zeigt sich die Hauptabstrahlrichtung typischerweise als ein Maximum. Eine Leuchte beziehungsweise seine Optik(en) können auch mehrere Hauptabstrahlrichtungen aufweisen.

Im Zusammenhang mit der Erfindung wird unter dem Begriff "Lichtverteilungskurve" eine Charakterisierung des von einer Leuchte abgestrahlten Lichts verstanden, die in einer Grafik dargestellt werden kann. Dabei werden die Lichtstärken der Leuchte in ihren verschiedenen Abstrahlungsrichtungen miteinander zu einem Kurvenzug verbunden. Die Lichtverteilung beschreibt die räumliche Verteilung des Lichts. Form und Symmetrie der Lichtverteilung kennzeichnen eine Tiefe beziehungsweise Breite und eine Symmetrie der Strahlung.

Die Auslenkstruktur kann dazu ausgestaltet sein, zu verhindern, dass in die Auslenkoptik durch eine ihrer Seitenkanten eingestrahltes Licht diese im Wesentlichen gradlinig durchdringt. Insbesondere kann mit der Auslenkstruktur das die Auslenkoptik durchdringende also quer und beispielsweise quasi vertikal durch die Auslenkoptik strömende Licht umgeleitet beziehungsweise in eine Abstrahlrichtung abgelenkt werden.

Der Abstrahlwinkel im Sinne der Erfindung bezieht sich auf einen kleinsten Winkel zwischen der Hauptabstrahlrichtung des durch die Vorderseite abgestrahlten Lichts und der Vorderseite selbst. Bei ebenen Vorderseiten ist dieser Winkel durch die Gerade der Hauptabstrahlrichtung und die Ebene der Vorderseite bestimmt. Bei unebenen Vorderseiten kann sich dieser Winkel aus der Geraden der Hauptabstrahlrichtung und eine Aufsichtsebene ergeben. Bei gekrümmten beziehungsweise gebogenen Vorderseiten oder auch bei anderen unebenen Vorderseiten kann sich der Abstrahlwinkel zwischen der Geraden der Hauptabstrahlrichtung und der Oberfläche der Vorderseite am Austrittspunkt des Lichts befinden.

Die erfindungsgemässe Leuchte ermöglicht, dass ein Arbeitsplatz und insbesondere eine Zieloberfläche auf einem Arbeits- oder Schreibtisch effizient und bevorzugt beleuchtet wird. Dabei kann sich diese Beleuchtung aus zwei Teilbeleuchtungen zusammensetzen. Zum einen ermöglichen die Auslenkoptik und das Auslenkleuchtmittel, dass Licht von der Leuchte schräg nach unten abgegeben wird und der Arbeitsplatz so direkt beleuchtet wird. Dadurch kann der Arbeitsplatz sauber ausgeleuchtet werden, ohne eine am Tisch positionierte Person zu blenden. Zum anderen ermöglichen die Strahleroptik und das Strahlerleuchtmittel, dass der Arbeitsplatz gleichzeitig indirekt über die Raumdecke beleuchtet wird. Auch hier kann ein Blenden effizient vermieden werden. So kann eine effiziente, gleichmässige und vollständige Ausleuchtung des Tisches beziehungsweise Arbeitsplatzes erreicht werden und gleichzeitig kann die Leuchte an einem Ort aufgestellt werden, wo sie vergleichsweise wenig stört. Weiter kann die Leuchte verhältnismässig kompakt und leicht beispielsweise als Stele beziehungsweise Lichtstele realisiert sein. Damit kann eine Platzersparnis gegenüber einer Beleuchtung mittels mehrerer getrennter Leuchten erreicht werden.

Die Auslenkoptik und die Strahleroptik sowie auch das Auslenkleuchtmittel und das Strahlerleuchtmittel sind typischerweise voneinander verschiedene Bauteile.

Vorzugsweise ist das Strahlerleuchtmittel des Leuchtteils dazu ausgebildet, dass der durch die Strahleroptik des Leuchtteils geformte Strom von sichtbarem Licht einen Lichtstrom in einem Bereich von etwa 6'000 Lumen bis etwa 12'000 Lumen und insbesondere in einem Bereich von etwa 8'000 Lumen bis etwa 10'000 Lumen aufweist. Ein Lichtstrom in dieser Grössenordnung ermöglicht ein effizientes und angepasstes indirektes Ausleuchten von Arbeitsplätzen über Raumdecken. Auch zur Erzeugung einer Hintergrundbeleuchtung können solche Lichströme geeignet sein.

Vorzugsweise ist das Auslenkleuchtmittel des Leuchtteils dazu ausgebildet, dass das durch die Vorderseite der Auslenkoptik abgestrahlte Licht einen Lichtstrom in einem Bereich von etwa 200 Lumen bis etwa 700 Lumen und insbesondere in einem Bereich von etwa 300 Lumen bis etwa 500 Lumen aufweist. Ein solcher Lichtstrom ermöglicht, ein Ausleuchten von Arbeitsplätzen in Büroräumen, wie es typischerweise aus Ergonomiegründen angestrebt wird.

Vorzugsweise umfasst die Leuchte ein IoT-Modul. IoT-Module (Internet of Things Module) sind typischerweise mit Komponenten bestückt, die eine zumeist kabellose Kommunikation ermöglichen. Um dies zu ermöglichen, sind sie mit einem Sender und vorzugsweise auch mit einem Empfänger ausgestattet, die zusammen in einem Adapter wie beispielsweise einem WLAN-Adapter realisiert sein können. Üblicherweise sind IoT-Module in einem immer verfügbaren Zustand (always on), sodass sie fortlaufend angesteuert werden können. Zudem sind sie meistens vergleichsweise robust und langlebig.

Eine solche Leuchte mit einem IoT-Modul ermöglicht ein effizientes Einbinden der Leuchte in ein Steuerungssystem wie beispielsweise in ein Gebäudemanagementsystem. Dadurch kann die Leuchte effizient betrieben werden und insbesondere auch für vergleichsweise grosse Büroflächen geeignet sein.

Bevorzugt weist das Strahlerleuchtmittel des Leuchtteils eine Leuchtdiode auf und die Strahleroptik des Leuchtteils umfasst einen Reflektor. Es können auch mehrere Leuchtdioden beziehungsweise Light Emitting Diodes (LED) vorgesehen sein, wobei die Anzahl Leuchtdioden auf die Geometrie der Strahleroptik und den zu erzeugenden Lichtstrom angepasst sein kann. Das Strahlerleuchtmittel kann auch als ein LED-Leuchtmittel bezeichnet werden.

Die eine oder mehrere Leuchtdiode des Strahlerleuchtmittels kann ein COB-LED-Leuchtmittel, ein CSP-LED-Leuchtmittel, ein LED-Laser oder ein LED-Array sein. Das Akronym "COB" steht in diesem Zusammenhang für Chip On Board. Unter dem Akronym "COB" wird eine Technik verstanden, bei der ungehäuste Halbleiter-Chips direkt auf Leiterplatten zu einer elektronischen Baugruppe montiert werden. Das Akronym "CSP" steht für Chip Scale Package. Darunter kann ein Chipgehäuse von integrierten Schaltungen verstanden werden, wobei das Gehäuse maximal 20% mehr Fläche als das Die ausmachen kann. Dazu können die Anschlüsse für Bestückungen ohne Bonding mit dem Die verbunden werden.

LED-Leuchtmittel können aus vielen Gründen vorteilhaft sein. Beispielsweise sind sie vergleichsweise energieeffizient, sodass die Leuchte einen vergleichsweise hohen Wirkungsrad aufweisen kann. Weiter sind sie genau konfigurierbar, sodass auf eine Anwendung angepasstes Licht effizient erzeugt werden kann. Zudem sind sie auch vergleichsweise langlebig. Insbesondere CSP-LED-Leuchtmittel ermöglichen zudem eine verhältnismässig kleine Baugrösse, sodass das Strahlerleuchtmittel vergleichsweise klein sein kann.

Bevorzugt weist das Auslenkleuchtmittel des Leuchtteils Leuchtdioden auf, die entlang der einen der Seitenkanten der Auslenkoptik des Leuchtteils angeordnet sind. Solche Leuchtdioden können auch der vorstehend beschriebenen Art sein. Durch das Vorsehen mehrerer Leuchtdioden kann das Auslenkleuchtmittel effizient Licht durch quasi die ganze eine der Seitenkanten in die Auslenkoptik einstrahlen.

Vorzugsweise umfasst die Leuchte ein zylinderförmiges Gehäuse, in dem der Fussteil und der Leuchtteil angeordnet sind. Dabei weist das Gehäuse eine offene Oberseite auf, das Strahlerleuchtmittel des Leuchtteils und die Strahleroptik des Leuchtteils sind so im Gehäuse angeordnet sind, dass der Strom von sichtbarem Licht durch die offene Oberseite erzeugbar ist, das Gehäuse weist eine Fensteröffnung auf, und das Auslenkleuchtmittel des Leuchtteils und die Auslenkoptik des Leuchtteils sind so im Gehäuse angeordnet sind, dass das durch die Vorderseite der Auslenkoptik abgestrahlte Licht durch die Fensteröffnung des Gehäuses abgestrahlt wird.

Das Gehäuse kann insbesondere im Wesentlichen rohrförmig sein. Die Fensteröffnung des Gehäuses kann mit einer lichtdurchlässigen Fensterscheibe versehen sein. Die Fensterscheibe kann aus einem Kunststoff oder aus Glas hergestellt sein. Auch die offene Oberseite kann mit einer lichtdurchlässigen Abdeckung abgedeckt sein.

Vorzugsweise umfasst die Leuchte einen Beleuchtungsstärkensensor, der dazu angeordnet ist, eine Beleuchtungsstärke in einem Zielbereich der Oberfläche beispielsweise an einem Arbeitsplatz zu ermitteln. Über einen solchen Beleuchtungsstärkensensor kann die Leuchte auf effiziente Weise die Beleuchtung des Zielbereichs konstant auf einem vordefinierten oder einstellbaren Wert halten. Dazu kann die Leuchte mit einer Steuerung ausgestattet sein, welche die Leuchtmittel beziehungsweise das Auslenkleuchtmittel und das Strahlerleuchtmittel jeweils dynamisch so einstellt, dass der vordefinierte beziehungsweise eingestellte Wert der Beleuchtungsstärke gehalten wird.

Vorzugsweise umfasst die Leuchte einen Präsenzsensor, der dazu angeordnet ist, die Anwesenheit einer Person zu ermitteln. Ein solcher Präsenzsensor ermöglicht es, dass die Leuchte je nach An- beziehungsweise Abwesenheit der Person automatisch ein- und/oder ausgeschaltet wird. Der Präsenzsensor kann auch so ausgebildet sein, dass er eine Identifikation der Person ermöglicht, sodass bevorzugte Einstellungen der Person automatisch vorgenommen werden können.

Vorzugsweise umfasst die Auslenkstruktur der Auslenkoptik des Leuchtteils Prismen, die zum Umlenken des Lichts ausgestaltet sind. Solche Prismen können auch als Auskoppelprismen bezeichnet werden. Sie ermöglichen eine effiziente Implementierung der Auslenkstruktur in vielfältiger Weise und in einer Vielzahl von unterschiedlichen Materialien.

Dabei sind die Prismen der Auslenkstruktur vorzugsweise als Linienprismen ausgebildet. Mit solchen Linienprismen kann das die Auslenkoptik längs oder quer durchdringende Licht effizient umgelenkt werden, sodass es von der im Wesentlichen ganzen Vorderseite abgestrahlt wird. Die Linienprismen der Auslenkstruktur sind dabei vorzugsweise quasi rechtwinklig zum durch die eine der Seitenkanten eingestrahlten Licht angeordnet. So kann die Auslenkoptik mehr oder weniger geradlinig quer oder längs durchströmendes Licht effizient in Richtung Vorderseite umgeleitet und von dieser abgestrahlt werden.

Die Prismen der Auslenkstruktur der Auslenkoptik des Leuchtteils sind vorzugsweise in Bezug auf die Vorderseite gleichmässig verteilt. Bei Linienprismen können beispielsweise die Abstände zwischen den einzelnen Linien gleichmässig beziehungsweise einheitlich sein. Dadurch kann eine gleichmässige Abstrahlung des Lichts durch die Vorderseite erreicht werden.

Die Vorder- und Rückseiten der Auslenkoptik des Leuchtteils können parallel zueinander angeordnet sein. Vorzugsweise stehen die Vorderseite und die Rückseite jedoch in einem Keilwinkel zueinander. Der Keilwinkel ist mit Vorteil kleiner als 45°, kleiner als 30° oder kleiner als 20°. Der Begriff "Keilwinkel" bezieht sich in diesem Zusammenhang auf einen Winkel zwischen den Vorder- und Rückseiten an einer Schnittstrecke beziehungsweise -linie der beiden. Die Schnittstrecke kann sich durch die Vorder- und Rückseiten direkt ergeben, falls sich diese berühren. Oder sie kann sich aus den Verlängerungen der Vorder- und Rückseiten ergeben. Indem die Vorder- und Rückseiten nicht parallel, sondern schräg beziehungsweise angewinkelt zueinander liegen, kann die Auslenkstruktur auf einfache Weise an einer der Vorder- und Rückseiten ausgebildet sein. Dadurch kann in einer konstruktiv vergleichsweise einfachen Ausführung stückweise ein Teil des in die Auslenkoptik eingestrahlten Lichts ausgelenkt werden, sodass die Vorderseite ein mehr oder weniger flächiges Licht abstrahlt.

Vorzugsweise ist die Leuchte an der einen der Seitenkanten der Auslenkoptik des Leuchtteils mit einer Lichtausrichtstruktur ausgestattet, wobei die Lichtausrichtstruktur dazu ausgebildet ist, Licht gerichtet zur Auslenkstruktur der Auslenkoptik des Leuchtteils zu führen. Eine solche Lichtausrichtstruktur ermöglicht auf effiziente Weise, dass vom Auslenkleuchtmittel zumindest in einem gewissen Umfang gestreutes Licht quasi vollständig in einer vordefinierten Einstrahlrichtung in die Auslenkoptik eingestrahlt wird. Dies kann einerseits die Effizienz einer mit der Auslenkoptik ausgestatteten Leuchte verbessern. Andererseits kann dies ein gleichmässiges, vollständiges beziehungsweise kontrolliertes Auslenken und damit Abstrahlen des Lichts aus der Auslenkoptik ermöglichen.

Dabei ist die Lichtausrichtstruktur der Auslenkoptik des Leuchtteils vorzugsweise dazu ausgebildet, Licht mit einem quasi parallelen Strahlengang zur Auslenkstruktur der Auslenkoptik des Leuchtteils zu führen. Parallel eingestrahltes Licht kann insbesondere eine wohldefinierte beziehungsweise eindeutige Einstrahlrichtung gewährleisten. Dies ermöglicht, dass mittels der Auslenkstruktur das Licht auf effiziente Weise und kontrolliert umgelenkt und von der Auslenkoptik abgestrahlt werden kann.

Die Lichtausrichtstruktur der Auslenkoptik des Leuchtteils umfasst vorzugsweise eine Mehrzahl von Kollimatoren. Solche Kollimatoren ermöglichen eine genaue Ausrichtung des Lichts. Insbesondere ermöglichen sie auf effiziente Weise, den Strahlengang des Lichts zu parallelisieren. Dabei ist vorzugsweise jedem Kollimator der Auslenkoptik des Leuchtteils eine Gruppe der Leuchtdioden des Auslenkleuchtmittels des Leuchtteils zugeordnet. Eine solche Gruppe der Leuchtdioden kann eine einzige Leuchtdiode umfassen. Oder, beispielsweise zur Erzeugung unterschiedlicher Lichtfarben, kann die Gruppe auch zwei oder mehr und insbesondere vier Leuchtdioden umfassen.

Vorzugsweise ist die Vorderseite der Auslenkoptik des Leuchtteils in einem Standwinkel zur Oberfläche angeordnet, der in einem Bereich von etwa 60° bis etwa 120°, in einem Bereich von etwa 70° bis etwa 110°, vorzugsweise in einem Bereich von etwa 80° bis etwa 100° und insbesondere in einem Bereich von etwa 85° bis etwa 105° oder der etwa 90° beträgt, wenn der Fussteil auf der Oberfläche aufgestellt ist.

Vorzugsweise ist das Auslenkleuchtmittel des Leuchtteils oberhalb der Auslenkoptik des Leuchtteils angeordnet ist. Eine solche Anordnung ermöglicht eine effiziente Ausgestaltung der Tischleuchte mit einer quasi vertikalen Auslenkoptik.

Die Strahleroptik kann dazu ausgestaltet sein, eine Lichtverteilungskurve des vom Strahlerleuchtmittel erzeugten Lichts so zu definieren, dass ein Leuchtenobjekt mit einer homogenen Leuchtdichte an einer Raumdecke erzeugbar ist.

Der Begriff "Leuchtenobjekt", wie er in diesem Zusammenhang verwendet wird, bezieht sich auf eine homogene geschlossene Lichtfläche mit einer definierten Grenze beziehungsweise scharfen Kanten. Das Leuchtenobjekt kann eine beliebige Form an der Raumdecke aufweisen. Insbesondere kann es rund oder polygonal an der Raumdecke geformt und beispielsweise deckenleuchtenartig ausgebildet sein. Unter dem Begriff "definierte Grenze" wird in diesem Zusammenhang eine Abnahme der Leuchtdichte an der Raumdecke auf höchstens 10%, höchstens 5% oder quasi 0% verstanden, die über maximal etwa 30% eines Durchmessers des Leuchtenobjekts oder einer Zentrumszone davon erfolgt. Dabei kann die Zentrumszone ein Bereich des Leuchtenobjekts sein, der nicht der definierten Grenze also einer Grenzzone zuzuordnen ist. Der Durchmesser kann bei unrunden Formen des Leuchtenobjekts ein angenäherter Durchmesser sein. Beispielsweise kann er bei einer quadratischen Form einer Diagonalen des Quadrats entsprechen. Unter dem Begriff "scharfe Kante" wird in diesem Zusammenhang eine Abnahme Leuchtdichte um mindestens etwa 20%, mindestens etwa 25%, mindestens etwa 30%, mindestens etwa 40% oder mindestens etwa 50% vorzugsweise auf etwa 0% verstanden, wobei diese Abnahme über maximal etwa 10% des Durchmessers des Leuchtenobjekts oder einer Zentrumszone davon erfolgt.

Der Begriff "Leuchtdichte" (Lv) bezieht sich hier auf die Helligkeit des Leuchtenobjekts an der Raumdecke, das als ausgedehnte, flächenhafte Lichtquelle wirkt. Sie kann Information über die Orts- und Richtungsabhängigkeit des vom Leuchtenobjekt abgegebenen Lichts liefern. Der Begriff "homogene Leuchtdichte" bezieht sich dabei darauf, dass die Helligkeit über die Fläche des Leuchtenobjekts im Wesentlichen gleich ist. Dabei kann unter "im Wesentlichen gleich" verstanden werden, dass die Helligkeit in der Fläche des Leuchtenobjekts an der Raumdecke nicht um mehr als etwa 30% beziehungsweise etwa 20% beziehungsweise etwa 10% beziehungsweise etwa 5% beziehungsweise etwa 3% ändert.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden die erfindungsgemässe Leuchte unter Bezugnahme auf die beigefügten Zeichnungen anhand von einem Ausführungsbeispiel detaillierter beschrieben. Es zeigen:
- Fig. 1: eine schematische Seitenansicht eines Ausführungsbeispiels einer erfindungsgemässen Leuchte;
- Fig. 2: eine schematische Frontansicht der Leuchte von Fig. 1;
- Fig. 3: eine schematische Querschnittsansicht der Leuchte von Fig. 1;
- Fig. 4: eine schematische Teilansicht der Querschnittsansicht von Fig. 3; und
- Fig. 5: eine schematische Ansicht an die Leuchte von Fig. 1 im Betrieb.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

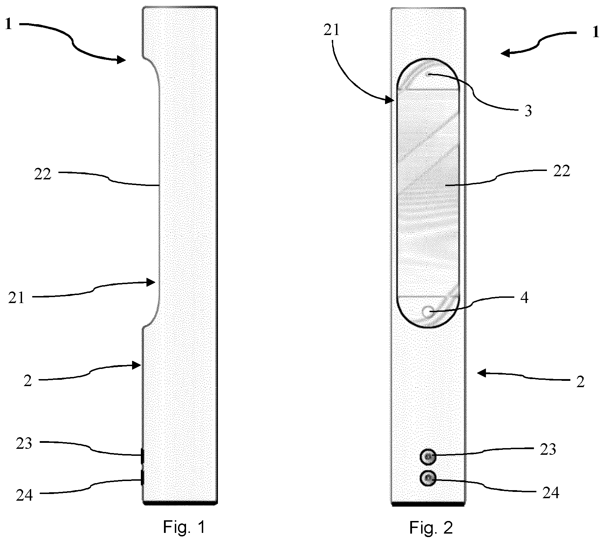

Fig. 1 und Fig. 2 zeigen eine Tischleuchte 1 als ein erstes Ausführungsbeispiel einer erfindungsgemässen Leuchte. Die Tischleuchte 1 umfasst ein rohrförmiges beziehungsweise zylindrisches Gehäuse 2, in das eine Fensteröffnung 21 eingelassen ist. In die Fensteröffnung 21 ist eine Fensterscheibe 22 aus Kunststoff als Sekundäroptik eingesetzt. Nach oben und unten hin ist die Fensterscheibe 22 gekrümmt ausgebildet, um in den gleichartig nach oben und nach unten hin gekrümmten Rand der Fensteröffnung 21 zu passen. In einen oberen Krümmungsabschnitt der Fensterscheibe 22 ist ein Beleuchtungsstärkensensor 3 eingelassen. In einen unteren Krümmungsabschnitt der Fensterscheibe 22 ist ein Präsenzsensor 4 eingelassen.

Die Tischleuchte 1 ist dazu ausgebildet, aufrecht auf eine ebene Oberfläche aufgestellt zu werden, sodass sie sich in vertikaler Richtung erstreckt. Gegen ein unteres Ende hin sind ein Direktlichtschalter 24 und ein Indirektlichtschalter 23 am Gehäuse 2 angeordnet. Zusätzlich zu den Lichtschaltern 23, 24 können auch noch weitere Bedienknöpfe am Gehäuse 2 vorgesehen sein. Beispielsweise kann ein Bedienknopf zur Auswahl einer von vorkonfigurierten Lichtszenen beziehungsweise Voreinstellungen vorhanden sein.

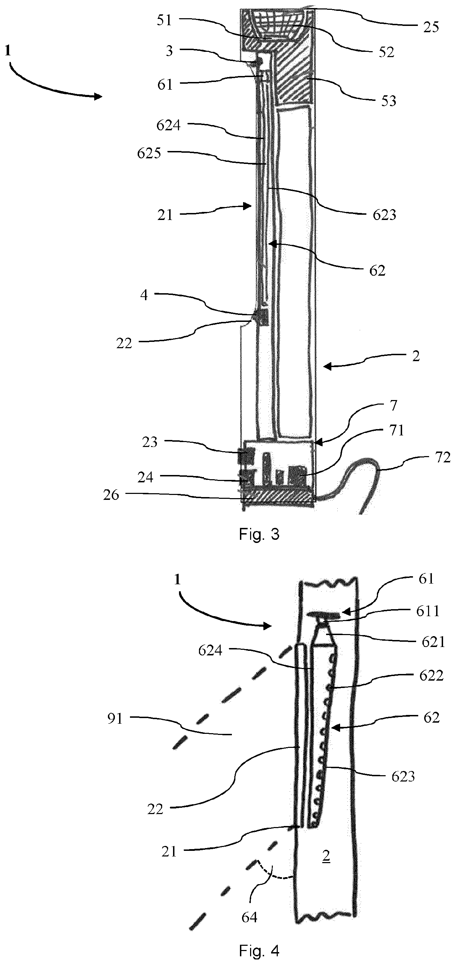

In Fig. 3 ist die Tischleuchte 1 in einem Querschnitt gezeigt. Dabei ist ersichtlich, dass das Gehäuse 2 eine offene Oberseite 25 aufweist, in die ein quasi parabolischer Reflektor 52 als Strahleroptik eingesetzt ist. Zentral in einem Bodenbereich des Reflektors 52 ist ein COB-LED-Leuchtmittel 51 als Strahlerleuchtmittel eingesetzt.

Angrenzend an die Fensterscheibe 22 ist eine lichtdurchlässige Auslenkplatte 62 als Auslenkoptik im Innenraum des Gehäuses 2 angeordnet. Die Auslenkplatte 62 umfasst eine rechteckige Vorderseite 624, einer der Vorderseite 624 gegenüberliegende rechteckige Rückseite 623, und vier die Vorderseite 624 mit der Rückseite 623 verbindende Seitenkanten 625. Die oberen und unteren Seitenkanten 625 sind rechteckig ausgeformt. Im in Fig. 3 gezeigten aufgestellten Zustand der Tischleuchte 1 ist die Vorderseite 624 aufrecht ausgerichtet und erstreckt sich parallel zur Fensterscheibe 22.

Entlang der oberen Seitenkante 625 der Auslenkplatte 62 ist ein LED-Leuchtmittel 61 als Auslenkleuchtmittel angeordnet. Das LED-Leuchtmittel 61 ist dazu angeordnet, Licht durch die obere Seitenkante 625 in die Auslenkplatte 62 einzustrahlen.

In einem unteren Bereich ist ein massiver Sockel 26 im Gehäuse 2 vorgesehen, der das Gehäuse 2 nach unten hin verschliesst und der Leuchte 1 in ihrem aufgestellten Zustand Stabilität verleiht. Auf dem Sockel 26 ist eine Elektronikeinheit 7 der Leuchte 2 angeordnet. Die Elektronikeinheit 7 umfasst Betriebskomponenten zum Betreiben des LED-Leuchtmittels 61 und des COB-LED-Leuchtmittels 51 unabhängig voneinander oder in einer vordefinierten Abhängigkeit zueinander. Weiter ist die Elektronikeinheit 7 mit einem IoT-Modul 71 ausgestattet und mit einem durch den Sockel 26 verlaufenden Anschlussstromkabel 72 versehen.

Das LED-Leuchtmittel 61, das COB-LED-Leuchtmittel 51 und der Reflektor 52 sind in einen Kühlkörper 53 eingebettet. Zusammen bilden sie mit der Auslenkplatte 62, dem Beleuchtungsstärkensensor 3 und dem Präsenzsensor 4 einen Leuchtteil der Leuchte 2. Der Sockel 26 und die Elektronikeinheit 7 bilden einen Fussteil der Leuchte 2.

Fig. 4 zeigt die Funktionsweise der Auslenkoptik 62 und des LED-Leuchtmittels 61 detaillierter. Die Auslenkplatte 62 ist keilförmig ausgebildet. Dabei werden die vertikalen Seitenkanten 625 entlang der Auslenkplatte 62 und weg von der oberen Seitenkante 625 schmäler. So schneiden sich die Ebenen in denen die Vorderseite 624 und die Rückseite 623 liegen ausserhalb der Auslenkplatte 62 in einem Keilwinkel von weniger als 20°.

Die obere Seitenkante 625 ist mit mehreren Einkoppelkollimatoren 621 als Lichtausrichtstruktur ausgestattet. Die Einkoppelkollimatoren 621 sind dazu ausgebildet, Licht mit einem quasi parallelen Strahlengang in die Auslenkplatte 62 einzuleiten. Dadurch strömt durch die Einkoppelkollimatoren 621 und somit die obere Seitenkante 625 eingestrahltes Licht geradlinig etwa parallel zu den vertikalen Seitenkanten 625 beziehungsweise den Längsseitenkanten in die Auslenkplatte 62.

Die Rückseite 623 der Auslenkplatte 62 ist mit einer Vielzahl von regelmässig beabstandeten Linienprismen 622 als Auslenkstruktur ausgestattet. Die Linienprismen 622 sind dazu ausgestaltet, durch die obere Seitenkante 625 eingestrahltes Licht in Richtung der Vorderseite 624 umzuleiten, sodass es durch die Vorderseite 624 abgestrahlt wird. Dabei liegen die Linienprismen 622 orthogonal zum durch die Einkoppelkollimatoren 621 erzeugten parallelen Strahlengang beziehungsweise parallel zur oberen Seitenkante 625. Durch die keilartige Form der Auslenkplatte 62 wird erreicht, dass das durch die obere Seitenkante 625 parallelisiert einströmendes Licht Schritt für Schritt beziehungsweise kontinuierlich ausgelenkt und durch die Vorderseite 12 abgestrahlt wird.

Die Auslenkplatte 62 liegt hinter der vertikal ausgerichteten, plattenartigen, nach oben und nach unten hin gekrümmte Fensterscheibe 22. Insbesondere grenzt die Vorderseite 624 der Auslenkplatte 62 an die Fensterscheibe 22 an. Das LED-Leuchtmittel 61 umfasst eine Mehrzahl von in einer Reihe an einer Platine montierten Leuchtdioden. Dabei ist immer eine Leuchtdiode einem der Einkoppelkollimatoren 621 der Auslenkplatte 62 zugeordnet, sodass von den Leuchtdioden erzeugtes Licht jeweils vom zugehörigen Einkoppelkollimator 621 parallelisiert und entlang der Längsseitenkanten 625 vertikal nach unten in beziehungsweise durch die Auslenkplatte 62 strömt. Wie oben bereits erwähnt wird durch die sich nach unten verjüngende Form der Auslenkplatte 62 portionenweise ein Teil des Lichts von einem der Linienprismen 622 in Richtung Vorderseite 624 umgeleitet und von dieser durch die Fensterscheibe 22 abgestrahlt. Dadurch erzeugt die Tischleuchte 1 ein Direktlicht 91, das von der Vorderseite 12 der Auslenkplatte 62 beziehungsweise der Fensterscheibe 22 ausgeht.

Dabei weist das Direktlicht 91 eine Hauptabstrahlrichtung auf, die einen Abstrahlwinkel 64 zur Vorderseite 624 beziehungsweise zur Fensterscheibe 22 beschreibt, der etwa 45° beträgt. Insbesondere ist der Abstrahlwinkel 64 durch die Ebene der Vorderseite 624 der Auslenkplatte 62 beziehungsweise der Fensterscheibe 22 und eine Gerade, in der die Hauptabstrahlrichtung liegt, gebildet. Zusätzlich wird das Direktlicht 91 von den Linienprismen 622 nicht nur so geleitet beziehungsweise erzeugt.

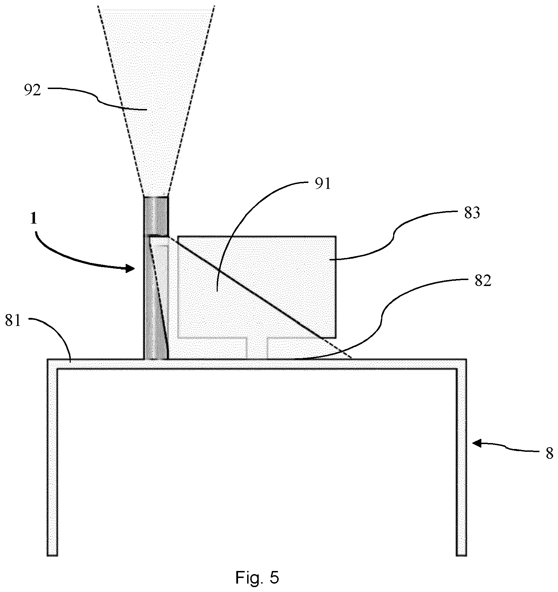

In Fig. 5 ist die Tischleuchte 1 in Betrieb auf einem Schreibtisch 8 dargestellt. Dabei ist die Tischleuchte 1 schräg versetzt zu einem Arbeitsplatz 82, der eine zu beleuchtende Oberfläche bildet, auf einer Tischplatte 81 des Schreibtischs 8 aufgestellt. Insbesondere ist sie seitlich neben einem Bildschirm 83 platziert, so dass sie den Arbeitsplatz beziehungsweise ein Arbeiten am Bildschirm 83 nicht stört. Die Auslenkplatte kann Beispielsweise so ausgebildet sein, dass die Linienprismen 622 einen kreisförmigen Spot auf der Tischplatte 81 erzeugen, der einen Spotdurchmesser von etwa 700 mm aufweist. Zudem kann ein Mittelpunkt des Spots etwa 500 mm nach vorne zur Tischleuchte 1 versetzt sein.

Wie in Fig. 5 ersichtlich ist, sind das COB-LED-Leuchtmittel 51 und der Reflektor 52 vertikal nach oben zu einer Raumdecke hin ausgerichtet. Das heisst, diese Komponenten sind dazu angeordnet, einen Lichtstrom 91 als Strom von sichtbarem Licht zu erzeugen. Der Lichtstrom 91 beträgt etwa 10'000 Lumen. Der Reflektor 52 ist quasi als Hülse mit parabolischen Innenflächen geformt und wird vom COB-LED-Leuchtmittel 51 abgegebenen Licht durchstrahlt. Dabei ist der Reflektor 52 dazu ausgebildet, aus dem vom COB-LED-Leuchtmittel 51 erzeugten Licht den Lichtstrom 91 beziehungsweise einen Beam zu formen. Der Lichtstrom 91 weist einen Brennpunkt auf, der in einer Abstrahlrichtung vom COB-LED-Leuchtmittel 51 nach oben beabstandet ist.

Der Lichtstrom 91 erzeugt ein virtuelles Leuchtenobjekt an der Raumdecke. Dabei wird mittels der vordefinierten zugehörigen LVK erreicht, dass das Leuchtenobjekt eine homogene Leuchtdichte aufweist. Insbesondere beträgt die homogene Leuchtdichte des Leuchtenobjekts maximal etwa 3'000 Cd/m². Eine Helligkeit in der Fläche des Leuchtenobjekts ändert um weniger 3%. Das Leuchtenobjekt 51 strahlt selbst wiederum Licht, das dem reflektierten Licht des Lichtstroms 91 entspricht, in Richtung Arbeitsplatz 82 ab. Das Licht des Leuchtenobjekts beleuchtet den Arbeitsplatz 82 somit indirekt über die Raumdecke.

Der Beleuchtungsstärkensensor 3 ist auf den Arbeitsplatz 82 ausgerichtet. Er ist mit einer Stelleinrichtung der Elektronikeinheit 7 verbunden. Die Stelleinrichtung ist dazu ausgestaltet aufgrund vom Beleuchtungsstärkensensor 3 empfangener Signale das LED-Leuchtmittel 61 und das COB-LED-Leuchtmittel 51 so einzustellen, dass die Beleuchtungsstärke einen vordefinierten Mindestwert am Arbeitsplatz 82 von etwa 500 Lux aufweist. Die Tischleuchte kann nach Bedarf so konfiguriert werden, dass ein Verhältnis zwischen Direktlicht und Indirektlicht auf dem Arbeitsplatz 82 konstant ist und die Stelleinrichtung beides aufgrund der Sensorsignale adaptiert, dass das Direktlicht fix vom Benutzer eingestellt ist und die Stelleinrichtung das Indirektlicht aufgrund der Sensorsignale adaptiert oder dass das Indirektlicht fix vom Benutzer eingestellt ist und die Stelleinrichtung das Direktlicht aufgrund der Sensorsignale adaptiert.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Leuchte (1) zum Aufstellen auf eine im wesentlichen ebene Oberfläche (82) wie beispielsweise eine Schreibtischplatte, umfassend:
einen Fussteil zum Aufstellen der Leuchte (1) auf der Oberfläche (82) und
einen Leuchtteil, der sich vom Fussteil nach oben erstreckt, wenn der Fussteil auf der Oberfläche (82) aufgestellt ist, wobei
der Leuchtteil ein Strahlerleuchtmittel (51) und eine Strahleroptik (52) umfasst,
die Strahleroptik (52) des Leuchtteils dazu ausgebildet ist, aus vom Strahlerleuchtmittel (51) erzeugten Licht einen Strom von sichtbarem Licht nach oben beispielsweise an eine Raumdecke zu formen, wenn der Fussteil auf der Oberfläche (82) aufgestellt ist,
wobei
der Leuchtteil ein Auslenkleuchtmittel (61) und eine Auslenkoptik (62) umfasst, wobei
die Auslenkoptik (62) des Leuchtteils im Wesentlichen plattenförmig mit einer Vorderseite (624), einer Rückseite (623), die Vorderseite (624) und die Rückseite (623) miteinander verbindenden Seitenkanten (625) und einer Auslenkstruktur (622) ausgebildet ist,
die Vorderseite (624) der Auslenkoptik (62) des Leuchtteils quasi aufrecht ausgerichtet ist, wenn der Fussteil auf der Oberfläche (82) aufgestellt ist,
das Auslenkleuchtmittel (61) des Leuchtteils dazu angeordnet ist, Licht durch eine der Seitenkanten (625) der Auslenkoptik (62) in die Auslenkoptik (62) einzustrahlen, und **dadurch gekennzeichnet, dass**
die Auslenkstruktur (622) der Auslenkoptik (62) des Leuchtteils dazu ausgestaltet ist, das durch die eine der Seitenkanten (625) eingestrahlte Licht umzuleiten, sodass es durch die Vorderseite (624) der Auslenkoptik (62) abgestrahlt wird und eine Hauptabstrahlrichtung aufweist, die einen Abstrahlwinkel (64) zur Vorderseite (624) beschreibt, der in einem Bereich von etwa 10° bis etwa 70°, vorzugsweise in einem Bereich von etwa 20° bis etwa 60° und insbesondere in einem Bereich von etwa 30° bis etwa 50° liegt oder der etwa 45° beträgt.

2. Leuchte (1) nach Anspruch 1, wobei das Strahlerleuchtmittel (51) des Leuchtteils dazu ausgebildet ist, dass der durch die Strahleroptik (52) des Leuchtteils geformte Strom von sichtbarem Licht einen Lichtstrom in einem Bereich von etwa 6'000 Lumen bis etwa 12'000 Lumen und insbesondere in einem Bereich von etwa 8'000 Lumen bis etwa 10'000 Lumen aufweist.

3. Leuchte (1) nach Anspruch 1 oder 2, wobei das Auslenkleuchtmittel (61) des Leuchtteils
dazu ausgebildet ist, dass das durch die Vorderseite (624) der Auslenkoptik (62) abgestrahlte Licht einen Lichtstrom in einem Bereich von etwa 200 Lumen bis etwa 700 Lumen und insbesondere in einem Bereich von etwa 300 Lumen bis etwa 500 Lumen aufweist, und/oder
Leuchtdioden aufweist, die entlang der einen der Seitenkanten (625) der Auslenkoptik (62) des Leuchtteils angeordnet sind.

4. Leuchte (1) nach einem der vorangehenden Ansprüche, die ein IoT-Modul (71) umfasst.

5. Leuchte (1) nach einem der vorangehenden Ansprüche, wobei das Strahlerleuchtmittel (51) des Leuchtteils zumindest eine Leuchtdiode aufweist und die Strahleroptik (52) des Leuchtteils einen Reflektor umfasst.

6. Leuchte (1) nach einem der vorangehenden Ansprüche, die ein zylinderförmiges Gehäuse (2) umfasst, in dem der Fussteil und der Leuchtteil angeordnet sind, wobei
das Gehäuse (2) eine offene Oberseite aufweist,
das Strahlerleuchtmittel (51) des Leuchtteils und die Strahleroptik (52) des Leuchtteils so im Gehäuse (2) angeordnet sind, dass der Strom von sichtbarem Licht durch die offene Oberseite erzeugbar ist,
das Gehäuse (2) eine Fensteröffnung (21) aufweist, und
das Auslenkleuchtmittel (61) des Leuchtteils und die Auslenkoptik (62) des Leuchtteils so im Gehäuse (2) angeordnet sind, dass das durch die Vorderseite (624) der Auslenkoptik (62) abgestrahlte Licht durch die Fensteröffnung (21) des Gehäuses (2) abgestrahlt wird.

7. Leuchte (1) nach einem der vorangehenden Ansprüche, die
einen Beleuchtungsstärkensensor (3) umfasst, der dazu angeordnet ist, eine Beleuchtungsstärke in einem Zielbereich der Oberfläche (82) zu ermitteln, und/oder
einen Präsenzsensor (4) umfasst, der dazu angeordnet ist, die Anwesenheit einer Person zu ermitteln.

8. Leuchte (1) nach einem der vorangehenden Ansprüche, wobei die Auslenkstruktur (622) der Auslenkoptik (62) des Leuchtteils Prismen umfasst, die zum Umlenken des Lichts ausgestaltet sind.

9. Leuchte (1) nach Anspruch 8, wobei die Prismen der Auslenkstruktur (622) der Auslenkoptik (62) des Leuchtteils als Linienprismen ausgebildet sind, die vorzugsweise quasi rechtwinklig zum durch die eine der Seitenkanten (625) der Auslenkoptik (62) des Leuchtteils eingestrahlten Licht angeordnet sind.

10. Leuchte (1) nach Anspruch 8 oder 9, wobei die Prismen der Auslenkstruktur (622) der Auslenkoptik (62) des Leuchtteils in Bezug auf die Vorderseite (624) der Auslenkoptik (62) des Leuchtteils gleichmässig verteilt sind.

11. Leuchte (1) nach einem der vorangehenden Ansprüche, wobei die Vorderseite (624) der Auslenkoptik (62) des Leuchtteils und die Rückseite (623) der Auslenkoptik (62) des Leuchtteils in einem Keilwinkel zueinander stehen, wobei der Keilwinkel vorzugsweise kleiner als 45°, kleiner als 30° oder kleiner als 20° ist.

12. Leuchte (1) nach einem der vorgehenden Ansprüche, die an der einen der Seitenkanten (625) der Auslenkoptik (62) des Leuchtteils mit einer Lichtausrichtstruktur (621) ausgestattet ist, wobei die Lichtausrichtstruktur (621) dazu ausgebildet ist, Licht gerichtet zur Auslenkstruktur (622) der Auslenkoptik (62) des Leuchtteils zu führen, und wobei die Lichtausrichtstruktur der Auslenkoptik (62) des Leuchtteils vorzugsweise dazu ausgebildet ist, Licht mit einem quasi parallelen Strahlengang zur Auslenkstruktur (622) der Auslenkoptik (62) des Leuchtteils zu führen.

13. Leuchte (1) nach Anspruch 12, wobei die Lichtausrichtstruktur der Auslenkoptik (62) des Leuchtteils eine Mehrzahl von Kollimatoren umfasst und wobei vorzugsweise jedem Kollimator der Auslenkoptik (62) des Leuchtteils eine Gruppe der Leuchtdioden des Auslenkleuchtmittels (61) des Leuchtteils zugeordnet ist.

14. Leuchte (1) nach einem der vorangehenden Ansprüche, wobei die Vorderseite (624) der Auslenkoptik (62) des Leuchtteils in einem Standwinkel zur Oberfläche (82) angeordnet ist, der in einem Bereich von etwa 60° bis etwa 120°, in einem Bereich von etwa 70° bis etwa 110°, vorzugsweise in einem Bereich von etwa 80° bis etwa 100° und insbesondere in einem Bereich von etwa 85° bis etwa 105° oder der etwa 90° beträgt, wenn der Fussteil auf der Oberfläche (82) aufgestellt ist.

15. Leuchte (1) nach einem der vorangehenden Ansprüche, wobei das Auslenkleuchtmittel (61) des Leuchtteils oberhalb der Auslenkoptik (62) des Leuchtteils angeordnet ist.

## Claims

1. Luminaire (1) for placement on a substantially flat surface (82) such as a desk panel, comprising:
a base part for placement of the luminaire (1) on the surface (82) and
a light part extending upward from the base part when the base part is placed on the surface (82), wherein
the light part comprises a jet lamp (51) and a spot optical system (52),
the spot optical system (52) of the light part is designed to form, from light generated from the spot lamp (51), a stream of visible light upward, for example to a room ceiling, when the base part is placed on the surface (82),
wherein
the light part comprises a deflection lamp (61) and a deflection optics (62), wherein
the deflection optics (62) of the light part is substantially planar with a front side (624), a rear side (623), side edges (625) interconnecting the front side (624) and the rear side (623), and a deflection structure (622),
the front side (624) of the deflection optics (62) of the light part is virtually upright when the base part is placed on the surface (82),
the deflection lamp (61) of the light part is arranged to radiate light through one of the side edges (625) of the deflection optics (62) into the deflection optics (62), and **characterized in that**
the deflection structure (622) of the deflection optics (62) of the light part is designed to redirect the light radiated through one of the side edges (625) so that it is emitted through the front side (624) of the deflection optics (62) and has a main emission direction which describes an emission angle (64) to the front side (624) which is in a range of approximately 10° to approximately 70°, preferably in a range of approximately 20° to approximately 60°, and in particular in a range of approximately 30° to approximately 50° or is approximately 45°.

2. Luminaire (1) according to claim 1, wherein the spot lamp (51) of the light part is designed such that the flow of visible light formed by the spot optical system (52) of the light part has a luminous flux in a range of approximately 6,000 lumens to approximately 12,000 lumens and in particular in a range of approximately 8,000 lumens to approximately 10,000 lumens.

3. Luminaire (1) according to either claim 1 or claim 2, wherein the deflection lamp (61) of the light part
is designed such that the light emitted through the front side (624) of the deflection optics (62) has a luminous flux in a range of approximately 200 lumens to approximately 700 lumens and in particular in a range of approximately 300 lumens to approximately 500 lumens, and/or
comprises light emitting diodes which are arranged along one of the side edges (625) of the deflection optics (62) of the light part.

4. Luminaire (1) according to any of the preceding claims, comprising an IoT-module (71).

5. Luminaire (1) according to any of the preceding claims, wherein the spot lamp (51) of the light part has at least one light emitting diode and the spot optical system (52) of the light part comprises a reflector.

6. Luminaire (1) according to any of the preceding claims, comprising a cylindrical housing (2) in which the base part and the light part are arranged, wherein
the housing (2) has an open upper side,
the spot lamp (51) of the light part and the spot optical system (52) of the light part are arranged in the housing (2) such that the stream of visible light can be generated through the open upper side,
the housing (2) has a window opening (21), and
the deflection lamp (61) of the light part and the deflection optics (62) of the light part are arranged in the housing (2) such that the light emitted through the front side (624) of the deflection optics (62) is emitted through the window opening (21) of the housing (2).

7. Luminaire (1) according to any of the preceding claims, comprising an illuminance sensor (3) which is arranged to determine an illuminance in a target region of the surface (82), and/or
comprising a presence sensor (4) which is arranged to determine the presence of a person.

8. Luminaire (1) according to any of the preceding claims, wherein the deflection structure (622) of the deflection optics (62) of the light part comprises prisms designed to deflect the light.

9. Luminaire (1) according to claim 8, wherein the prisms of the deflection structure (622) of the deflection optics (62) of the light part are designed as linear prisms which are preferably arranged virtually at a right angle to the light radiated through one of the side edges (625) of the deflection optics (62) of the light part.

10. Luminaire (1) according to either claim 8 or claim 9, wherein the prisms of the deflection structure (622) of the deflection optics (62) of the light part are distributed uniformly with respect to the front side (624) of the deflection optics (62) of the light part.

11. Luminaire (1) according to any of the preceding claims, wherein the front side (624) of the deflection optics (62) of the light part and the rear side (623) of the deflection optics (62) of the light part are at a wedge angle to one another, wherein the wedge angle is preferably less than 45°, less than 30° or less than 20°.

12. Luminaire (1) according to any of the preceding claims, which is equipped with a light alignment structure (621) on one of the side edges (625) of the deflection optics (62) of the light part, wherein the light alignment structure (621) is designed to guide light directed to the deflection structure (622) of the deflection optics (62) of the light part, and wherein the light alignment structure of the deflection optics (62) of the light part is preferably designed to guide light with a virtually parallel beam path to the deflection structure (622) of the deflection optics (62) of the light part.

13. Luminaire (1) according to claim 12, wherein the light alignment structure of the deflection optics (62) of the light part comprises a plurality of collimators and wherein preferably each collimator of the deflection optics (62) of the light part is assigned a group of the light emitting diodes of the deflection lamp (61) of the light part.

14. Luminaire (1) according to any of the preceding claims, wherein the front side (624) of the deflection optics (62) of the light part is arranged at an angle to the surface (82) which is in a range of approximately about 60° to approximately 120°, in a range of approximately 70° to approximately 110°, preferably in a range of approximately 80° to approximately 100°, and in particular in a range of approximately 85° to approximately 105° or is approximately 90°, when the base part is placed on the surface (82).

15. Luminaire (1) according to any of the preceding claims, wherein the deflection lamp (61) of the light part is arranged above the deflection optics (62) of the light part.

## Revendications

1. Luminaire (1) destiné à être posé sur une surface (82) sensiblement plane telle que par exemple un plateau de bureau, comprenant :
une partie de pied destinée à la pose du luminaire (1) sur la surface (82) et
une partie d'éclairage qui s'étend à partir de la partie de pied vers le haut lorsque la partie de pied est posée sur la surface (82), dans lequel
la partie d'éclairage comprend un moyen d'éclairage formant projecteur (51) et une optique de projecteur (52),
l'optique de projecteur (52) de la partie d'éclairage est conçue pour former, à partir de lumière générée par le moyen d'éclairage formant projecteur (51), un flux de lumière visible vers le haut, par exemple au niveau d'un plafond, lorsque la partie de pied est posée sur la surface (82),
dans lequel
la partie d'éclairage comprend un moyen d'éclairage de déviation (61) et une optique de déviation (62), dans lequel
l'optique de déviation (62) de la partie d'éclairage est conçue sensiblement sous forme de plaque comportant une face avant (624), une face arrière (623), des bords latéraux (625) reliant la face avant (624) et la face arrière (623) l'une à l'autre et une structure de déviation (622),
la face avant (624) de l'optique de déviation (62) de la partie d'éclairage est orientée de manière quasiment verticale lorsque la partie de pied est posée sur la surface (82),
le moyen d'éclairage de déviation (61) de la partie d'éclairage est disposé pour irradier de la lumière à travers l'un des bords latéraux (625) de l'optique de déviation (62) dans l'optique de déviation (62), et **caractérisé en ce que**
la structure de déviation (622) de l'optique de déviation (62) de la partie d'éclairage est réalisée pour rediriger la lumière irradiée à travers l'un des bords latéraux (625) de telle sorte qu'elle est émise à travers la face avant (624) de l'optique de déviation (62) et présente une direction d'émission principale qui décrit un angle d'émission (64) par rapport à la face avant (624), lequel angle est situé dans une plage d'environ 10° à environ 70°, de préférence dans une plage d'environ 20° à environ 60° et en particulier dans une plage d'environ 30° à environ 50° ou est d'environ 45°.

2. Luminaire (1) selon la revendication 1, dans lequel le moyen d'éclairage formant projecteur (51) de la partie d'éclairage est conçu de sorte que le flux de lumière visible formé par l'optique de projecteur (52) de la partie d'éclairage présente un flux lumineux dans une plage d'environ 6 000 lumens à environ 12 000 lumens et en particulier dans une plage d'environ 8 000 lumens à environ 10 000 lumens.

3. Luminaire (1) selon la revendication 1 ou 2, dans lequel le moyen d'éclairage de déviation (61) de la partie d'éclairage
est conçu de sorte que la lumière émise à travers la face avant (624) de l'optique de déviation (62) présente un flux lumineux dans une plage d'environ 200 lumens à environ 700 lumens et en particulier dans une plage d'environ 300 lumens à environ 500 lumens, et/ou
présente des diodes électroluminescentes qui sont disposées le long de l'un des bords latéraux (625) de l'optique de déviation (62) de la partie d'éclairage.

4. Luminaire (1) selon l'une des revendications précédentes, comprenant un module d'IDO (71).

5. Luminaire (1) selon l'une des revendications précédentes, dans lequel le moyen d'éclairage formant projecteur (51) de la partie d'éclairage présente au moins une diode électroluminescente et l'optique de projecteur (52) de la partie d'éclairage comprend un réflecteur.

6. Luminaire (1) selon l'une des revendications précédentes, comprenant un boîtier (2) cylindrique dans lequel la partie de pied et la partie d'éclairage sont disposées, dans lequel
le boîtier (2) présente une face supérieure ouverte,
le moyen d'éclairage formant projecteur (51) de la partie d'éclairage et l'optique de projecteur (52) de la partie d'éclairage sont disposés dans le boîtier (2) de telle sorte que le flux de lumière visible peut être généré à travers la face supérieure ouverte,
le boîtier (2) présente une ouverture de fenêtre (21), et
le moyen d'éclairage de déviation (61) de la partie d'éclairage et l'optique de déviation (62) de la partie d'éclairage sont disposés dans le boîtier (2) de telle sorte que la lumière émise à travers la face avant (624) de l'optique de déviation (62) est émise à travers l'ouverture de fenêtre (21) du boîtier (2).

7. Luminaire (1) selon l'une des revendications précédentes, comprenant un capteur d'intensité d'éclairage (3) disposé pour déterminer une intensité d'éclairage dans une zone cible de la surface (82), et/ou
comprenant un capteur de présence (4) disposé pour déterminer la présence d'une personne.

8. Luminaire (1) selon l'une des revendications précédentes, dans lequel la structure de déviation (622) de l'optique de déviation (62) de la partie d'éclairage comprend des prismes réalisés pour dévier la lumière.

9. Luminaire (1) selon la revendication 8, dans lequel les prismes de la structure de déviation (622) de l'optique de déviation (62) de la partie d'éclairage sont conçus en tant que prismes linéaires qui sont de préférence disposés de manière quasiment perpendiculaire par rapport à la lumière irradiée à travers l'un des bords latéraux (625) de l'optique de déviation (62) de la partie d'éclairage.

10. Luminaire (1) selon la revendication 8 ou 9, dans lequel les prismes de la structure de déviation (622) de l'optique de déviation (62) de la partie d'éclairage sont répartis régulièrement par rapport à la face avant (624) de l'optique de déviation (62) de la partie d'éclairage.

11. Luminaire (1) selon l'une des revendications précédentes, dans lequel la face avant (624) de l'optique de déviation (62) de la partie d'éclairage et la face arrière (623) de l'optique de déviation (62) de la partie d'éclairage se situent à un angle de coin l'une par rapport à l'autre, dans lequel l'angle de coin est de préférence inférieur à 45°, inférieur à 30° ou inférieur à 20°.

12. Luminaire (1) selon l'une des revendications précédentes, lequel est équipé, au niveau de l'un des bords latéraux (625) de l'optique de déviation (62) de la partie d'éclairage, d'une structure d'orientation de lumière (621), dans lequel la structure d'orientation de lumière (621) est conçue pour guider de la lumière de manière orientée vers la structure de déviation (622) de l'optique de déviation (62) de la partie d'éclairage, et dans lequel la structure d'orientation de lumière de l'optique de déviation (62) de la partie d'éclairage est de préférence conçue pour guider de la lumière selon un chemin optique quasiment parallèle à la structure de déviation (622) de l'optique de déviation (62) de la partie d'éclairage.

13. Luminaire (1) selon la revendication 12, dans lequel la structure d'orientation de lumière de l'optique de déviation (62) de la partie d'éclairage comprend une pluralité de collimateurs et dans lequel, de préférence, un groupe de diodes électroluminescentes du moyen d'éclairage de déviation (61) de la partie d'éclairage est associé à chaque collimateur de l'optique de déviation (62) de la partie d'éclairage.

14. Luminaire (1) selon l'une des revendications précédentes, dans lequel la face avant (624) de l'optique de déviation (62) de la partie d'éclairage est disposée dans une position d'angle par rapport à la surface (82) qui est située dans une plage d'environ 60° à environ 120°, dans une plage d'environ 70° à environ 110°, de préférence dans une plage d'environ 80° à environ 100° et en particulier dans une plage d'environ 85° à environ 105° ou qui est d'environ 90°, lorsque la partie de pied est posée sur la surface (82).

15. Luminaire (1) selon l'une des revendications précédentes, dans lequel le moyen d'éclairage de déviation (61) de la partie d'éclairage est disposé au-dessus de l'optique de déviation (62) de la partie d'éclairage.
